# EUROPÄISCHE PATENTANMELDUNG

(11) **EP 3 620 445 A1**
(43) Veröffentlichungstag der Anmeldung: **11.03.2020**
(21) Anmeldenummer: 19195266.2
(22) Anmeldetag: 04.09.2019
(51) Int. Cl.: C04B 28/06, C04B 28/14, B22C 1/18

(54) **GIESSEREIBINDERMISCHUNG UND GIESSEREIFORMSTOFFMISCHUNG ZUR HERSTELLUNG EINES GIESSEREIFORMSTOFFS ZUR HERSTELLUNG VON GIESSEREIFORMEN UND -KERNEN**

(30) Priorität: 05.09.2018 DE 102018121651
(71) Anmelder: Technische Universität Bergakademie Freiberg, 09599 Freiberg (DE)
(72) Erfinder: Dunkel, Stephan, 09599 Freiberg (DE); Neubert, Markus, 09599 Freiberg (DE); Schmidt, Peter, 09599 Freiberg (DE); Erler, Harald, 09599 Freiberg (DE); Dr. Polzin, Hartmut, 09599 Freiberg (DE)
(74) Vertreter: Kailuweit & Uhlemann Patentanwälte Partnerschaft mbB

(57) **Zusammenfassung**

Die Erfindung betrifft eine Gießereibindermischung und eine Gießereiformstoffmischung zur Herstellung eines Gießereiformstoffs zur Herstellung von Gießereiformen und/oder-kernen und ein Verfahren zur Herstellung eines Gießereiformstoffs zur Herstellung von Gießereiformen und -kernen. Die Gießereibindermischung zur Herstellung eines Gießereiformstoffs zur Herstellung von Gießereiformen und/oder-kernen ist geeignet, durch Mischen mit einem Aktivator Ettringit zu bilden und enthält dabei 5 bis 80 Gew.-% mindestens eines Sulfatträgers, 20 bis 95 Gew.-% mindestens eines Calciumaluminats und/oder Calciumsulfoaluminats, 0 bis 30 Gew.-% mindestens einer calciumhaltigen Komponente und 0 bis 10 Gew.-% mindestens eines Additivs, wobei sich die Bestandteile der Gießereibindermischung zu 100 Gew.-% ergänzen.

## Beschreibung

Die Erfindung betrifft eine Gießereibindermischung und eine Gießereiformstoffmischung zur Herstellung eines Gießereiformstoffs zur Herstellung von Gießereiformen und/oder -kernen, sowie ein Verfahren zur Herstellung eines Gießereiformstoffszur Herstellung von Gießereiformen und -kernen.

Bei der Herstellung großformatiger Gussteile mit Gewichten größer eine Tonne pro Stück stoßen gängige Grünsandformverfahren mit ton- bzw. bentonitgebundenem Formstoffen an ihre Grenzen hinsichtlich Formfestigkeit und Verdichtung des Formstoffs. Der Formstoff ist beim Abguss der Schmelze einer hohen thermischen und mechanischen Belastung ausgesetzt, z. B. starken metallostatischen Drücken bedingt durch die Größe der zu gießenden Teile. Die Verdichtung solch großer Gießformen ist durch physikalische Verfahren, wie Pressen, Rütteln, Vibration etc. nur mit erheblichen Aufwand realisierbar.

Beim Gießen großformatiger Gussteile kommen gegenwärtig chemisch kaltselbsthärtende Formstoffe zum Einsatz. Dabei können organische oder anorganische Bindemittel zur Herstellung des Formstoffs eingesetzt werden. Organische Bindemittel, wie Furan- oder Phenolharze haben den Vorteil, dass so gebundene Formstoffe schnell aushärten und hohe Festigkeiten erreichen. Entscheidender Nachteil der organischen Bindemittel ist die unvollständige Zersetzung unter Freisetzung krebserregender Verbindungen durch die hohen Temperaturen beim Abguss der Schmelze. Weiterhin nachteilig enthält der Formstoff nach der Entnahme des Gussteils Reste des organischen Bindemittels, so dass der Formstoff aufwendig und teuer regeneriert oder auf der Deponie als Sondermüll entsorgt werden muss.

Als Alternative kommen anorganische Bindemittel zur Herstellung der Formstoffe in Betracht. Anorganische Bindemittel auf Basis von Wasserglas, wässrigen Alkalisilikatlösungen, finden in Kombination mit einer organischen Härterkomponente, einem Ester, Einsatz im sogenannten Wasserglas-Ester-Verfahren. Nachteilig ist, dass sich solche Formstoffe bei höheren Abgusstemperaturen thermoplastisch verhalten und somit die Maßgenauigkeit der Gussstücke eingeschränkt wird, da die Formen beim Abguss durch die Schmelze verformt werden. Alternativ kann der wasserglasgebundene Formstoff auch durch Einwirkung von Kohlendioxid-Gas, sogenanntes Wasserglas-CO₂-Verfahren, oder durch Einwirkung von Wärme, sogenanntes Wasserglas-Warmluft-Verfahren, aushärten. Diese Verfahren eignen sich nicht für große Gussteile und werden üblicherweise nur für das Herstellen von Gießkernen genutzt.

Ein weiteres anorganisches Bindemittel ist Zement, welcher bereits seit Ende des 19. Jhd. zur Herstellung von Gießereiformen genutzt wird. Einem Formgrundstoff, wie Formsand, wird Zement und Wasser beigemischt, wobei der entstehende Zementleim um die Sandkörner herum eine Binderhülle und Binderbrücken bildet. In DE 520 175 A wird erstmals ein reines Zementformverfahren beschrieben, damals als Randupson-Prozess bekannt. Es wird ein Mörtel zur Herstellung von Kernen und Formen für die Metallgießerei offenbart, der aus 100 Volumenteilen Portlandzement, 600 Volumenteilen Sand und 90 Volumenteilen Wasser besteht. Dieses Verfahren war prädestiniert für den Eisengroßguss, wurde jedoch auch in modifizierter Form für andere Gießverfahren genutzt, wie in DE 683 333 A offenbart wird.

Das Zusatzpatent DE 545 123 A offenbart weiterhin ein Verfahren zur Herstellung von Massen für Gussformen und -kerne unter Verwendung der nach DE 520 175 A hergestellten und gebrauchten Formmassen, die zerkleinert und mit Wasser und gegebenenfalls geringen Mengen eines hydraulischen (mit Wasser reagierenden) Bindemittels gemischt werden.

Zemente als Bindemittel für Formstoffe zeichnen sich vor allem durch die hohe thermische Beständigkeit der Form, die Emissionsfreiheit beim Abguss der Schmelze, die geringen Formstoffkosten, sowie die gute Umweltverträglichkeit bzw. Weiter- / Wiederverwendung der gebrauchten Formstoffe aus. Nachteilig ist bisher die lange Abbindezeit des zementgebundenen Formstoffs, welche zu Verzögerungen im nachfolgenden Gießprozess führt.

Im Zementformverfahren eingesetzte Zemente sind zumeist Portlandzemente, entsprechend DIN EN 197-1 ein Normalzement wie CEM I. CEM I besteht zu 95 bis 100 Masse-% aus einem Hauptbestandteil, den Portlandzementklinkerphasen, wie Tricalciumsilikat (Alit, C3S), Dicalciumsilikat (Belit, C2S), Tricalciumaluminat (C3A) und Tetracalciumaluminatferrit (C4AF).

Die im Zementformverfahren eingesetzten CEM I Zemente (Portlandzemente) erreichen erst nach 36 bis 72 h ausreichende Festigkeiten, um die Beständigkeit der Gießform sowohl bei der Modellentnahme als auch bei der Formmanipulation in automatisierten Formanlagen zu gewährleisten. Die langen Aushärtezeiten stellen für die Anwendung von Zement als Bindemittel für Formstoffe zur Herstellung von Gießereiformen - und kernen einen entscheidenden Nachteil dar. Auch wenn bereits in den 1940er Jahren aus der bauchemischen Industrie bekannte Beschleuniger für den Einsatz in Gießereiformstoffen vorgeschlagen werden, sind diese problematisch hinsichtlich Entgasungs- und Versinterungsneigungen.

DE 742 603 A offenbart ein Verfahren zur Verkürzung der Erstarrungszeit von Gießform- und Kernmassen, die mit einem hydraulischen Bindemittel versehen sind, indem die geformten Massen zusätzlich CO₂-Gasen ausgesetzt werden. Damit lässt sich die sonst übliche mindestens 24-stündige Abbindezeit im Zementsandformverfahren auf ein bis zwei Stunden reduzieren und das Verfahren für kleine Formen und Kerne anwenden. Dafür muss jedoch die gesamte Form bis zum Abguss unter einer CO₂-Athmosphäre gehalten werden, was sich besonders bei sehr großen Formen schwierig gestaltet.

Das ursprüngliche Zementsandformverfahren unter Verwendung von Portlandzementen kann die gewünschten Festigkeiten und Abbindezeiten eines harzgebundenen Formstoffs bisher nicht erreichen. Es existieren jedoch noch weitere Zementsysteme, welche als Bindemittel für das Zementsandformverfahren in Frage kommen.

DD 247 618 A1 offenbart einen Zementformstoff mit einem stufenlos regelbaren Erhärtungsverlauf, der einen Aktivator aus Pentaerythrit und/oder Ameisensäure und/oder Estern enthält. Der Formstoff enthält als Bindemittel eine definierte Mischung von Tonerdezement und Portlandzement. Das Mischungsverhältnis liegt im Bereich von 3 % Tonerdezement / 97 %Portlandzement bis zu 95 % Tonerdezement / 5 %Portlandzement. Nach 24 h Erhärtungszeit erreicht ein derartiger Formstoff eine Druckfestigkeit von 2 MPa unabhängig von der Verarbeitungszeit und dem Mischungsverhältnis. Die Gießbereitschaft eines Formstoffs aus 9,7 % Portlandzement, 0,3 % Tonerdezement, 6 % Aktivatorlösung und 84 % Quarzsand ist im Mittelgussbereich nach 6 Stunden gegeben. Die angegeben Formstofffestigkeiten nach derartigen Erhärtungszeiten sind für einen wirtschaftlichen Betrieb im Eisengroßguss mitunter zu niedrig.

US 3 155 526 offenbart ein Caliciumaluminosulfat und eine Zementzusammensetzung bestehend aus dem Hauptbestandteil Portlandzement und einem Nebenbestandteil einer expansiven Komponente. Die expansive Komponente ist eine Mischung aus einer CaO-Quelle, einer SO₃-Quelle und einer Quelle für Al₂O₃, Fe₂O₃, Cr₂O₃, Mn₂O₃ oder V₂O₃ und reduziert die bekannte Schwindung des Hauptbestandteil Portlandzements. Nachteilig ist, dass das hier offenbarte Bindemittel für Baustoffe nicht die für Gießereiformstoffe im Großguss geforderten Festigkeiten erreicht.

DE 352 7978 A1 offenbart einen Schnellzement zur Herstellung von Betonprodukten, von Mörteln für Estriche, Putze, Ausbesserungen, Befestigen von Dübeln und Ankern, Verlegearbeiten und Befestigungsmaßnahmen, Vergußmörtel oder dergleichen. Der Schnellzement enthält reaktive Calciumsilikate und reaktive Aluminate, weist eine hohe Frühfestigkeit auf und gewährleistet eine einstellbare Verarbeitungszeit. Ein derartiger Schnellzement enthält reaktive Calciumsilikate, reaktive Aluminate, Calciumsulfathalbhydrat, Calciumsulfatanhydrit-II, Calciumhydroxid und organische Abbindeverzögerer. Die angestrebte Zusammensetzung kann durch eine Mischung aus 5 bis 90 Gew.-Teilen Portlandzement und 10 bis 95 Gew.-Teilen Tonerdezement erzielt werden. Die zugesetzte Menge an Calciumsulfathalbhydrat, Calciumsulfatanhydrit-II, Calciumhydroxid richtet sich nach der Mischung. Derartige Schnellzemente sind für die Anwendung als Bindemittel für Gießereiformstoffe nur bedingt geeignet, infolge einer unzureichend schnellen Erhärtung des Gießereiformstoffs.

EP 1 785 405 B1 offenbart ein ettringitbildendes Bindemittel, bestehend aus Calciumaluminat und Calciumsulfat mit einem Molverhältnis von CaSO₄ : Al₂O₃ im Bereich von 2,2 bis 2,95 und dessen Verwendung in bauchemischen Zusammensetzungen. Das Calciumaluminat ist ein technisch hergestelltes, mineralisches Calciumaluminatphasengemisch mit mindestens 70 Gew.-% C3A und/oder C12A7 und weiteren Bestandteile, wie CA, Siliziumdioxid oder anderen aluminiumoxidhaltige Phasen. Ein derartiges Bindemittel ist auf die Anwendung in bauchemischen Zusammensetzungen mit entsprechenden Verhältnissen von Bindermittel zu Sand ausgerichtet.

Glasser et al. offenbart einen Calciumsulfoaluminatzement-Klinker, der 18 % Gips enthält und gemischt mit einem Wasser-Zement-Wert von 0,43 und im Verhältnis 1 : 2,5 Zement: Sand, der nach 1 Tag eine Druckfestigkeit von 44,2 MPa aufweist. Ettringit bildet sich in dieser Mischung bereits 15 - 20 min nach dem Mischen und ist verantwortlich für den Festigkeitsanstieg. Ein derartiger Calciumsulfoaluminatzement-Klinker ist auf die Anwendung als Baustoff ausgerichtet und erlaubt keine Aussage über die Eignung als Bindemittel für Gießereiformstoffe.

Aufgabe der Erfindung ist es, eine Gießereibindermischung und eine Gießereiformstoffmischung zur Herstellung eines Gießereiformstoffs für die Herstellung von Gießereiformen und/oder - kernen, sowie ein Verfahren zur Herstellung eines Gießereiformstoffs zur Herstellung von Gießereikernen und/oder -formen anzugeben, die keine umweit- und/oder gesundheitsschädlichen Emissionen beim Abguss der Metallschmelze erzeugen und eine schnelle Erhärtung und hohe Frühfestigkeiten bei Biegezugbelastung des Gießereiformstoffs ermöglicht.

Die Aufgabe wird gelöst durch eine Gießereibindermischung nach Anspruch 1 und eine Gießereiformstoffmischung nach Anspruch 7 und ein Verfahren zur Herstellung eines Gießereiformstoffs nach Anspruch 10. Vorteilhafte Ausführungen geben die abhängigen Ansprüche wieder.

Die Gießereibindermischung zur Herstellung eines Gießereiformstoffs zur Herstellung von Gießereiformen und/oder -kernen ist erfindungsgemäß geeignet, durch Mischen mit einem Aktivator Ettringit zu bilden.

Die Gießereibindermischung enthält erfindungsgemäß mindestens einen Sulfatträger, mindestens ein Calciumaluminat und/oder ein Calciumsulfoaluminat, und ggf. mindestens eine calciumhaltige Komponente und ggf. mindestens ein Additiv.

Erfindungsgemäß enthält die Gießereibindermischung 5 bis 80 Gew.-% mindestens eines Sulfatträgers, 20 bis 95 Gew.-% mindestens eines Calciumaluminats und/oder Calciumsulfoaluminats, 0 bis 30 Gew.-% mindestens einer calciumhaltigen Komponente und 0 bis 10 Gew.-% mindestens eines Additivs, wobei sich die Bestandteile der Gießereibindermischung zu 100 Gew.-% ergänzen.

Vorteilhaft ermöglicht eine derartige Gießereibindermischung eine deutliche höhere Frühfestigkeit bei Biegezugbelastung und eine schnellere Erhärtung im Vergleich zu aus dem Stand der Technik bekannten, anorganischen, hydraulisch erhärtenden Bindemitteln für Gießereiformstoffe. Dadurch kann die wirtschaftliche Form- bzw. Kernherstellung und die wirtschaftliche Herstellung von Gussteilen gewährleistet werden. Weiterhin vorteilhaft erzeugt eine derartige Gießereibindermischung keine umweit- und/oder gesundheitsschädliche Emissionen beim Abguss der Metallschmelze in der Gießereiform, wie aus dem Stand der Technik bekannte organische Bindemittel.

Eine Gießereibindermischung wird auch bezeichnet als anorganisches, hydraulisch erhärtendes, ettringitbildendes Bindemittel oder als Bindemittel.

Voraussetzung für die Bildung von Ettringit, auch bezeichnet als 3·CaO·Al₂O₃·3·CaSO₄·32 H₂O, ist das Vorhandensein von Aluminiumoxid und Sulfatträgern, sowie einer Calciumoxidquelle. Aluminiumoxid liegt innerhalb des Bindemittels in Form reaktiver Aluminate, wie Calciumaluminaten und/oder Calciumsulfoaluminat vor. Vorteilhaft bildet sich Ettringit sehr schnell, wodurch frühzeitig eine hohe Festigkeit z.B. bei Biegezugbelastung des Gießereiformstoffs erreicht wird.

Die erfindungsgemäße Gießereibindermischung bildet beim Mischen mit einem Aktivator, bevorzugt Wasser, und ggf. Additiven Ettringit als hauptsächlich festigkeitswirksame Phase und erhärtet innerhalb von maximal 6 h selbstständig. Die Bildung anderer festigkeitswirksamer Phasen ist vernachlässigbar oder erfolgt erst nach 6h. Vorteilhaft bildet eine derartige Gießereibindermischung etwa 15 - 40 Gew.-% Ettringit, bezogen auf die Masse der Gießereibindermischung.

Der mindestens eine Sulfatträger im Sinne der Erfindung ist eine Sulfatverbindung, welche die Erhärtung des Bindemittels reguliert. Bekannte Sulfatverbindungen stammen aus dem Bereich der Alkali- und Erdalkalisulfatverbindungen sowie Mischungen dieser. Die für den Erhärtungsvorgang benötigen Mengen an Sulfat müssen entsprechend der Reaktionskinetik zum richtigen Zeitpunkt zur Verfügung stehen. Dies wird maßgeblich von der Löslichkeit des Sulfatträgers beeinflusst.

Bevorzugte Sulfatträger sind Calciumsulfate. Die Löslichkeit, sowie die Tatsache, dass beim Lösen von Calciumsulfaten, die für die Ettringitbildung nötigen Calciumionen frei werden, machen Calciumsulfate zum bevorzugten Sulfatträger.

Calciumsulfat kann in den bekannten Formen Gips CaSO₄·H₂O, Halbhydrat CaSO₄·0,5 H₂O oder Anhydrit CaSO₄ vorliegen.

In einer Ausführungsform ist der Sulfatträger eine Mischung aus Sulfatverbindungen, beispielsweise eine Mischung aus unterschiedlichen Formen des Calciumsulfats.

Vorteilhaft lassen sich durch den Gehalt an Additiven die Verarbeitungseigenschaften des Bindemittels steuern. Dem Fachmann bekannte Additive zur Steuerung der Verarbeitungszeit sind beispielsweise Erhärtungsbeschleuniger, Erstarrungsverzögerer, Verflüssiger oder Stellmittel. Bekannte Erhärtungsbeschleuniger sind beispielweise Calciumhydroxid, Calciumchlorid, Lithiumhydroxid, Lithiumcarbonat, Lithiumchlorid, versch. Natriumphosphate, sowie Natriumaluminat und Aluminiumhydroxid. Bekannte Erstarrungsverzögerer sind beispielsweise Zitronensäure, Weinsäure sowie deren Salze. Bekannte Verflüssiger sind beispielsweise verschiedene Carboxylsäuren, Zitronensäure sowie einige Natriumphosphate.

In einer bevorzugten Ausführungsform weisen der mindestens eine Sulfatträger, das mindestens eine Calciumaluminat und/oder Calciumsulfoaluminat eine spezifische Oberfläche nach Blaine von mindestens 2500 cm²/g auf.

Der Blaine-Wert ist ein standardisiertes Maß für den Grad der Mahlfeinheit von Zementkomponenten und wird mit dem Blaine-Gerät gemessen. Dabei wird die spezifische Oberfläche eines Pulvers bestimmt und in cm²/g angegeben. Weiterhin vorteilhaft wird durch die spezifische Oberfläche der einzelnen Komponenten des Bindemittels von mehr als 2500 cm²/g die Reaktivität der Komponenten erhöht, so dass die festigkeitswirksame Ettringitbildung früher einsetzt.

In einer bevorzugten Ausführungsform umfasst das mindestens eine Calciumaluminat eine Mischung aus Calciumaluminaten und/oder Tonerdezementklinker.

Bekannte Calciumaluminate, Verbindungen aus Calciumoxid und Aluminiumoxid, sind CaO·Al₂O₃, auch als CA bezeichnet, 3 CaO·Al₂O₃, auch als C3A bezeichnet, CaO·2 Al₂O₃, auch als CA2 bezeichnet, oder 12 CaO·7 Al₂O₃, auch als C12A7 bezeichnet.

In einer bevorzugten Ausführungsform ist das mindestens eine Calciumaluminat eine Mischung aus Calciumaluminaten. Bevorzugt enthält die Mischung möglichst große Anteile an CA und/oder C12A7, vorzugsweise mindestens 60 Gew.-%. Vorteilhaft reagieren nur CA und/oder C12A7im relevanten Zeitraum, so dass eine Verfestigung innerhalb von maximal 6h eintritt. In einer weiteren bevorzugten Ausführungsform ist das mindestens eine Calciumaluminat ein Tonerdezementklinker. Tonerdezementklinker sind eine Mischung aus den Calciumaluminaten CA und C12A7 und weiteren Bestandteilen, wie 4 CaO·Al₂O₃·Fe₂O₃, auch als C4AF bezeichnet und 2 CaO-Al₂O₃-SiO₂, auch als C2AS bezeichnet.

In Abhängigkeit vom Herstellungsprozess enthalten Tonerdezementklinker üblicherweise 30 bis 60 Gew.-% CA und 6 bis 10 Gew.-% C12A7 und als Rest weitere Bestandteile. Vorteilhaft wird durch das mindestens eine Calciumaluminat die Ettringitbildung im Bindemittel nach Zugabe des Aktivators favorisiert und damit eine schnellere Erhärtung und eine erhöhte Frühfestigkeit besonders bei Biegezugbelastung erzielt. Bevorzugt ist das mindestens eine Calciumaluminat ein Tonerdezementklinker. Vorteilhaft sind Tonerdezementklinker kommerziell verfügbar und kostengünstiger als reine, technisch hergestellte Calciumaluminatphasen.

In einer bevorzugten Ausführungsform umfasst das mindestens eine Calciumsulfoaluminat Yeelimit und/oder calciumsulfoaluminathaltige Zementklinker.

Yeelimit 4 CaO·3 Al₂O₃·SO₃, auch als C4A3S bezeichnet, kann als technisch hergestellter Yeelimit vorliegen. Calciumsulfoaluminathaltige Zementklinker sind beispielsweise bekannte CŜA-Zementklinker, deren Hauptbestandteil Yeelimit ist. CŜA-Zementklinker enthalten beispielsweise je nach Herstellungsprozess bis zu 90 Gew.-% Yeelimit und als Rest weitere Bestandteile, vorrangig Calciumsilikate, beispielsweise CaO·2 SiO₂, auch als C2S oder Belit bezeichnet.

Die Calciumsilikate spielen für die Ausbildung der Festigkeit eine untergeordnete Rolle. Calciumsilikate werden erst nach erfolgter Ettringitbildung mit dem eventuell verbleibenden Wasser zu Calciumsilikathydratphasen, auch CSH-Phasen genannt, umgesetzt. Bevorzugt ist das Calciumsulfoaluminat ein reiner Yeelimit. Vorteilhaft lässt sich die Erhärtung des Bindemittels dadurch besser steuern, da keine weiteren Phasen vorliegen, die den Erhärtungsverlauf beeinflussen.

In einer Ausführungsform enthält die Gießereibindermischung 5 bis 80 Gew.-% mindestens eines Sulfatträgers und 20 bis 95 Gew.-% mindestens eines Calciumaluminats oder eines Calciumsolfoaluminats. In einer bevorzugten Ausführungsform enthält die Gießereibindermischung 5 bis 80 Gew.-% mindestens eines Sulfatträgers und 20 bis 95 Gew.-% Tonerdezementklinker.

In einer weiteren Ausführungsform enthält die Gießereibindermischung 5 bis 80Gew.-% mindestens eines Sulfatträgers und 20 bis 95 Gew.-% Yeelemit. Es kann vorteilhaft sein, dass die Gießereibindermischung 5 bis 80 Gew.-% mindestens eines Sulfatträgers und 20 bis 95 Gew.-% mindestens eines Calciumaluminats und eines Calciumsulfoaluminats enthält.

In einer Ausführungsform enthält die Gießereibindermischung 5 bis 80 Gew.-% mindestens eines Sulfatträgers, und 20 bis 95 Gew.-% Tonerdezementklinker und Yeelemit. Eine Gießereibindermischung enthält beispielsweise 14 Gew.-% mindestens eines Sulfatträgers und 86 Gew.-% mindestens eines Calciumaluminats, wie Tonerdezementklinker.

In einer weiteren bevorzugten Ausführungsform ist der mindestens eine Sulfatträger Calciumsulfat. Vorteilhaft werden bedingt durch die Löslichkeit von Calciumsulfat, die für die Ettringitbildung nötigen Calciumionen frei. Calciumsulfat kann als Gips CaSO₄·H₂O, Halbhydrat CaSO₄·0,5 H₂O oder Anhydrit CaSO₄ vorliegen. Dem Fachmann ist bekannt, dass sich die einzelnen Formen des Calciumsulfats in ihrer Lösungskinetik unterscheiden. So löst sich das Halbhydrat schneller als Anhydrit oder Gips. Auch das Vorhandensein der anderen Bestandteile des Bindemittels beeinflusst die Löslichkeit. So kann es in bestimmten Zusammensetzungen des Bindemittels vorteilhaft sein, dass der mindestens eine Sulfatträger Gips ist. Es kann aber auch vorteilhaft sein, dass der mindestens eine Sulfatträger eine Mischung aus Halbhydrat und Anhydrit ist. Vorteilhaft lässt sich dadurch die Lösungsgeschwindigkeit des Calciumsulfats gut steuern.

In einer Ausführungsform ist der Sulfatträger eine Mischung aus Sulfatverbindungen, beispielsweise eine Mischung aus unterschiedlichen Formen des Calciumsulfats.

Eine calciumhaltige Komponente im Sinne der Erfindung ist eine Calciumverbindung, die direkt oder bei Kontakt mit dem Aktivator Calciumionen freisetzt. Die freigesetzten Calciumionen reagieren mit den anderen Komponenten der Gießereibindermischung oder mit von den anderen Komponenten der Gießereibindermischung freigesetzten Stoffen. Vorteilhaft können durch den Zusatz von calciumhaltigen Komponenten die Kosten der Gießereibindermischung gesenkt werden, da der Anteil des mindestens einen Calciumaluminats und/oder des Calciumsulfoaluminats und des mindestens einen Sulfatträgers gesenkt werden können. Weiterhin vorteilhaft lassen sich die Verarbeitungszeiten durch den Zusatz calciumhaltiger Komponenten genauer einstellen.

In einer Ausführungsform weist die calciumhaltige Komponente eine spezifische Oberfläche nach Blaine von mindestens 2500 cm²/g auf.

In einer weiteren Ausführungsform enthält die Gießereibindermischung 0 bis 20 Gew.-% mindestens einer calciumhaltigen Komponente und 25 bis 90 Gew.-% mindestens eines Calciumaluminats und/oder Calciumsulfoaluminats und 10 bis 75 Gew.-% mindestens eines Sulfatträgers und 0 bis 10 Gew.-% mindestens eines Additivs, wobei sich die Bestandteile der Gießereibindermischung zu 100 Gew.-% ergänzen.

In einer weiteren Ausführungsform enthält die Gießereibindermischung 0 bis 10 Gew.-% mindestens einer calciumhaltigen Komponente und 60 bis 90 Gew.-% mindestens eines Calciumaluminats und/oder Calciumsulfoaluminats und 10 bis 40 Gew.-% mindestens eines Sulfatträgers und 0 bis 10 Gew.-% mindestens eines Additivs, wobei sich die Bestandteile der Gießereibindermischung zu 100 Gew.-% ergänzen.

In einer weiteren Ausführungsform enthält die Gießereibindermischung 5 bis 20 Gew.-% mindestens einer calciumhaltigen Komponente und 25 bis 55 Gew.-% mindestens eines Calciumaluminats und/oder Calciumsulfoaluminats und 30 bis 65 Gew.-% mindestens eines Sulfatträgers und 0 bis 10 Gew.-% mindestens eines Additivs, wobei sich die Bestandteile der Gießereibindermischung zu 100 Gew.-% ergänzen.

In einer bevorzugten Ausführungsform ist die mindestens eine calciumhaltige Komponente ausgewählt aus Portlandzementen und Kalk.

Portlandzemente im Sinne der Erfindung sind dem Fachmann bekannte Zemente, die als Bestandteile Portlandzementklinker enthalten, bspw. die nach DIN EN 197-1 genormten CEM I bis V Zemente, oder Mischungen dieser.

Kalk kann in Form von Brandkalk oder gelöschtem Kalk vorliegen. Bevorzugt liegt Kalk in Form von gelöschten Kalk, als Calciumhydroxid vor. Besonders bevorzugt ist die calciumhaltige Komponente Portlandzementklinker. Vorteilhaft findet bei Portlandzementklinkern die Freigabe von Calciumionen zeitverzögert statt.

Portlandzementklinker enthalten im Wesentlichen Calciumsilikate, wie 3 CaO·SiO₂, auch als C3S bezeichnet, 2 CaO·SiO₂, auch als C2S bezeichnet, und geringere Anteile von 3 CaO·Al₂O₃, auch C3A bezeichnet, und 4 CaO·Al₂O₃·Fe2O₃, auch als C4AF bezeichnet.

In einer bevorzugten Ausführungsform umfasst der mindestens eine Sulfatträger Calciumsulfat und eine Mischung unterschiedlicher Formen des Calciumsulfats.

Calciumsulfat kann in den bekannten Formen Gips CaSO₄·H₂O, Halbhydrat CaSO₄·0,5 H₂O oder Anhydrit CaSO₄ vorliegen.

Weiterhin zur Erfindung gehört eine Gießereiformstoffmischung.

Erfindungsgemäß enthält die Gießereiformstoffmischung zur Herstellung eines Gießereiformstoffs zur Herstellung von Gießereiformen und/oder -kernen die Komponenten Formgrundstoff und Gießereibindermischung, wobei zur Herstellung eines Gießereiformstoffs die Komponenten geeignet sind durch Mischen mit einem Aktivator und ggf. mindestens einem Additiv Ettringit zu bilden.

Dabei enthält die Gießereibindermischung 5 bis 80 Gew.-% mindestens eines Sulfatträgers, 20 bis 95 Gew.-% mindestens eines Calciumaluminats und/oder Calciumsulfoaluminats, 0 bis 30 Gew.-% mindestens einer calciumhaltigen Komponente und 0 bis 10 Gew.-% mindestens eines Additivs, wobei sich die Bestandteile der Gießereibindermischung zu 100 Gew.-% ergänzen und die Gießereiformstoffmischung enthält 2,5 bis 20 Gew.-% der Gießereibindermischung.

Vorteilhaft bildet ein aus einer derartigen Gießereiformstoffmischung hergestellter Gießereiformstoff keine umweit- und/oder gesundheitsschädlichen Emissionen beim Abguss der Metallschmelze. Weiterhin vorteilhaft erhärtet eine derartige Gießereiformstoffmischung bei der Herstellung eines Gießereiformstoffs bereits innerhalb von 6 h und erreicht eine hohe Frühfestigkeit von mindestens 50 N/cm², bevorzugt mindestens 80 N/cm² bei Biegezugbelastung. Dadurch ist die schnelle Form- und/oder Kernherstellung und ein verzögerungsfreier Betrieb innerhalb der Gießerei gewährleistet.

Weiterhin vorteilhaft bietet ein aus einer derartigen Gießereiformstoffmischung hergestellter Gießereiformstoff gießereitechnisch relevante Eigenschaften, wie eine entsprechende Gasdurchlässigkeit, so dass Gase beim Abguss der Schmelze entweichen können, ohne die Form zu zerstören. Weiterhin vorteilhaft lässt sich ein aus einer erfindungsgemäßen Gießereiformstoffmischung hergestellter Gießereiformstoff mit herkömmlichen Methoden regenerieren, d.h. wiederaufbereiten.

Eine derartige Gießereiformstoffmischung ist zur Herstellung eines Gießereiformstoffs unter Bildung von Ettringit, durch Mischen mit einem Aktivator und ggf. mindestens eines Additivs geeignet.

Ein Formgrundstoff im Sinne der Erfindung ist ein körniges Feuerfestmaterial, welches gemischt mit einer Gießereibindermischung und einem Aktivator und ggf. Additiven zur Herstellung von Gießereiformen und/oder -kernen genutzt wird und auch als Formsand bezeichnet wird. Dem Fachmann sind typische Formgrundstoffe, wie beispielsweise Quarzsand bekannt. Ein Formgrundstoff kann auch ein Spezialsand, wie beispielsweise Bauxitsand, Chromit-, Zirkon- oder Olivinsand sein.

In einer bevorzugten Ausführungsform ist der Formgrundstoff Quarzsand.

Der mindestens eine Sulfatträger im Sinne der Erfindung ist eine Sulfatverbindung, die die Erhärtung der Gießereibindermischung reguliert. Bekannte Sulfatverbindungen stammen aus dem Bereich der Alkali- und Erdalkalisulfatverbindungen sowie Mischungen dieser. Die für den Erhärtungsvorgang benötigen Mengen an Sulfat müssen entsprechend der Reaktionskinetik zum richtigen Zeitpunkt zur Verfügung stehen. Dies wird maßgeblich von der Löslichkeit des Sulfatträgers beeinflusst. Bevorzugte Sulfatträger sind Calciumsulfate. Die Löslichkeit sowie die Tatsache, dass beim Lösen von Calciumsulfaten, die für die Ettringitbildung nötigen Calciumionen frei werden, machen Calciumsulfate zum bevorzugten Sulfatträger. Calciumsulfat kann in den bekannten Formen Gips CaSO₄·H₂O, Halbhydrat CaSO₄·0,5 H₂O oder Anhydrit CaSO₄ vorliegen. In einer Ausführungsform ist der Sulfatträger eine Mischung aus Sulfatverbindungen, beispielsweise eine Mischung aus unterschiedlichen Formen des Calciumsulfats.

Mindestens ein Calciumaluminat im Sinne der Erfindung umfasst ein Calciumaluminat, eine Verbindung aus Calciumoxid und Aluminiumoxid, eine Mischung aus Calciumaluminaten und Tonerdezementklinker. Bekannte Verbindungen aus Calciumoxid und Aluminiumoxid sind beispielsweise CaO·Al₂O₃, auch als CA bezeichnet, 3 CaO·Al₂O₃, auch als C3A bezeichnet, CaO·2 Al₂O₃, auch als CA2 bezeichnet, oder 12 CaO·7 Al₂O₃, auch als C12A7 bezeichnet.

In einer bevorzugten Ausführungsform ist das mindestens eine Calciumaluminat eine Mischung aus Calciumaluminaten. Bevorzugt enthält die Mischung möglichst große Anteile an CA und/oder C12A7 von mindestens 60 Gew.-%.

In einer weiteren bevorzugten Ausführungsform ist das mindestens eine Calciumaluminat Tonerdezementklinker. Tonerdezementklinker sind eine Mischung aus den Calciumaluminaten CA und C₁₂A₇ und weiteren Bestandteilen, wie 4 CaO·Al₂O₃·Fe₂O₃ (auch als C4AF bezeichnet) und 2 CaO·Al₂O₃·SiO₂ (auch als C2AS bezeichnet).

Ein Calciumsulfoaluminat, auch als CSA bezeichnet, im Sinne der Erfindung umfasst Yeelemit 4 CaO·3 Al₂O₃·SO₃ und Calciumsulfoaluminathaltige Zementklinker.

In einer Ausführungsform umfasst die calciumhaltige Komponente Portlandzemente und/oder Kalk.

Portlandzemente im Sinne der Erfindung sind dem Fachmann bekannte Zemente, die als Bestandteile Portlandzementklinker enthalten, bspw. die nach DIN EN 197-1 genormten CEM I bis V Zemente, oder Mischungen dieser.

Kalk kann in Form von Brandkalk oder gelöschtem Kalk vorliegen. Bevorzugt liegt Kalk in Form von gelöschten Kalk, als Calciumhydroxid vor. Besonders bevorzugt ist die calciumhaltige Komponente Portlandzementklinker. Vorteilhaft findet bei Portlandzementklinkern die Freigabe von Calciumionen zeitverzögert statt. In einer Ausführungsform umfasst die calciumhaltige Komponente Portlandzementklinker und/oder Kalk.

In einer weiteren Ausführungsform enthält die Gießereibindermischung 0 bis 20 Gew.-% mindestens einer calciumhaltigen Komponente und 25 bis 90 Gew.-% mindestens eines Calciumaluminats und/oder Calciumsulfoaluminats und 10 bis 75 Gew.-% mindestens einen Sulfatträgers und 0 bis 10 Gew.-% mindestens eines Additivs, wobei sich die Bestandteile der Gießereibindermischung zu 100 Gew.-% ergänzen.

In einer weiteren Ausführungsform enthält die Gießereibindermischung 0 bis 10 Gew.-% mindestens einer calciumhaltigen Komponente und 60 bis 90 Gew.-% mindestens eines Calciumaluminats und/oder Calciumsulfoaluminats und 10 bis 40 Gew.-% mindestens eines Sulfatträgers und 0 bis 10 Gew.-% mindestens eines Additivs, wobei sich die Bestandteile der Gießereibindermischung zu 100 Gew.-% ergänzen.

In einer weiteren Ausführungsform enthält die Gießereibindermischung 5 bis 20 Gew.-% mindestens einer calciumhaltigen Komponente und 25 bis 55 Gew.-% mindestens eines Calciumaluminats und/oder Calciumsulfoaluminats und 30 bis 65 Gew.-% mindestens eines Sulfatträgers und 0 bis 10 Gew.-% mindestens eines Additivs, wobei sich die Bestandteile der Gießereibindermischung zu 100 Gew.-% ergänzen.

In einer bevorzugten Ausführungsform enthält die Gießereiformstoffmischung 7 bis 15 Gew.-% der Gießereibindermischung.

Dem Fachmann ist bekannt, dass über den Gehalt an Gießereibindermischung bei der Herstellung des Gießereiformstoffs dessen Eigenschaften, wie Gasdurchlässigkeit und Festigkeit beeinflusst werden können und ein Optimum eingestellt werden kann. So können höhere Gehalte an Gießereibindermischung die Festigkeitsausbildung fördern und geringere Gehalte an Gießereibindermischung die Gasdurchlässigkeit erhöhen.

In einer bevorzugten Ausführungsform umfasst das mindestens eine Additiv Erhärtungsbeschleuniger, Erstarrungsverzögerer, Stellmittel oder Verflüssiger. Dem Fachmann bekannte Erhärtungsbeschleuniger, die die Erhärtung eines Gießereiformstoffs beschleunigen, sind beispielweise Calciumhydroxid, Calciumchlorid, Lithiumhydroxid, Lithiumcarbonat, Lithiumchlorid, versch. Natriumphosphate, sowie Natriumaluminat und Aluminiumhydroxid. Dem Fachmann bekannte Erstarrungsverzögerer, die die Erstarrung eines Gießereiformstoffs verzögern, sind beispielsweise Zitronensäure, Weinsäure sowie deren Salze. Dem Fachmann bekannte Verflüssiger, die die Verarbeitbarkeit eines Gießereiformstoffs verbessern, sind beispielsweise verschiedene Carboxylsäuren, Zitronensäure sowie einige Natriumphosphate.

Weiterhin zur Erfindung gehört ein Verfahren zur Herstellung eines Gießereiformstoffs.

Das erfindungsgemäße Verfahren zur Herstellung eines Gießereiformstoffs zur Herstellung von Gießereiformen und/oder -kernen durch Mischen eines Formgrundstoffs, einer Gießereibindermischung nach einem der Ansprüche 1 bis 6 und eines Aktivators, wobei 2,5 bis 20 Gew.-% der Gießereibindermischung, bezogen auf die Masse des Formgrundstoffs, und 20 bis 100 Gew.-% des Aktivators, bezogen auf die Masse der Gießereibindermischung, mit dem Formgrundstoff gemischt werden.

In einer bevorzugten Ausführungsform werden der Formgrundstoff und die Gießereibindermischung nach einem der Ansprüche 1 bis 6 mit Wasser als Aktivator gemischt.

Bevorzugt ist der Aktivator Wasser. Vorteilhaft ist Wasser ein kostengünstiger Aktivator und bildet beim Abguss der Metallschmelze in die aus dem Gießereiformstoff hergestellte Gießereiform keine umweit- und/oder gesundheitsschädlichen Emissionen im Vergleich zu bekannten organischen Aktivatoren.

In einer Ausführungsform des Verfahrens wird beim Mischen des Formgrundstoffs, der Gießereibindermischung nach einem der Ansprüche 1 bis 6 und des Aktivators mindestens ein Additiv zugegeben. Dies kann vorteilhaft sein, wenn in dem erfindungsgemäßen Verfahren zur Herstellung eines Gießereiformstoffs zur Herstellung von Gießereiformen und/oder-kernen ein Formgrundstoff, eine Gießereibindermischung nach einem der Ansprüche 1 bis 6, und ein Aktivator gemischt werden und die Gießereibindermischung 0 Gew.-% mindestens eines Additivs enthält.

In einer vorteilhaften Ausgestaltung des Verfahrens zur Herstellung von Gießereiformstoffen wird dem Aktivator mindestens ein Additiv zugegeben. Vorteilhaft ist dadurch das mindestens eine Additiv bereits im Aktivator gelöst und kann sich homogen im Gießereiformstoff verteilen. Bekannte Additive sind Erhärtungsbeschleuniger, Erstarrungsverzögerer, Stellmittel oder Verflüssiger. Dem Fachmann bekannte Erhärtungsbeschleuniger, die die Erhärtung eines Gießereiformstoffs beschleunigen, sind beispielweise Calciumhydroxid, Calciumchlorid, Lithiumhydroxid, Lithiumcarbonat, Lithiumchlorid, versch. Natriumphosphate, sowie Natriumaluminat und Aluminiumhydroxid. Dem Fachmann bekannte Erstarrungsverzögerer, die die Erstarrung eines Gießereiformstoffs verzögern, sind beispielsweise Zitronensäure, Weinsäure sowie deren Salze. Dem Fachmann bekannte Verflüssiger, die die Verarbeitbarkeit eines Gießereiformstoffs verbessern, sind beispielsweise verschiedene Carboxylsäuren, Zitronensäure sowie einige Natriumphosphate.

In einer weiteren Ausgestaltung des Verfahrens werden dem Aktivator 0 bis 10 Gew.-% mindestens eines Additivs, bezogen auf die Masse der Gießereibindermischung zugegeben.

In einer Ausführungsform werden 20 bis 100 Gew.-% Wasser, bezogen auf die Masse der Gießereibindermischung, mit dem Formgrundstoff und der Gießereibindermischung gemischt. Bevorzugt werden 40 bis 60 Gew.-% Wasser, bezogen auf die Masse der Gießereibindermischung mit dem Formgrundstoff und der Gießereibindermischung gemischt.

Vorteilhaft wird durch einen verringerten Wassergehalt die Gefahr des Zerstörens der Gießereiform während des Abgusses der Schmelze verringert, da weniger Wasser im Gießereiformstoff enthalten ist, der als Wasserdampf entweicht.

In einer Ausführungsform liegen die Verarbeitungszeiten des Gießereiformstoffs im Bereich von 5 bis 60 min. Vorteilhaft ist damit eine ausreichende Verarbeitungszeit für einen verzögerungsfreien Betrieb der Gießerei gewährleistet.

Ein derart hergestellter Gießereiformstoff enthält bspw. 70 bis 94 Gew.-% eines Formgrundstoffs, 3,7 bis 19,2 Gew.-% der Gießereibindermischung 1,5 bis 14,3 Gew.-% des Aktivators, jeweils bezogen auf die Gesamtmasse des Gießereiformstoffs, wobei sich die Anteile der einzelnen Komponenten zu 100 Gew.-% ergänzen.

Vorteilhaft bildet ein derart hergestellter Gießereiformstoff keine umweit- und/oder gesundheitsschädlichen Emissionen beim Abguss der Metallschmelze. Weiterhin vorteilhaft erhärtet ein derart hergestellter Gießereiformstoff bereits innerhalb von 6 h und erreicht eine hohe Frühfestigkeit von mindestens 50 N/cm², bevorzugt mindestens 80 N/cm² bei Biegezugbelastung. Dadurch ist die schnelle Form- und/oder Kernherstellung und ein verzögerungsfreier Betrieb innerhalb der Gießerei gewährleistet.

Weiterhin vorteilhaft bietet ein derart hergestellter Gießereiformstoff gießereitechnisch relevante Eigenschaften, wie eine entsprechende Gasdurchlässigkeit, so dass Gase beim Abguss der Schmelze entweichen können, ohne die Form zu zerstören. Weiterhin vorteilhaft lässt sich ein solcher Gießereiformstoff mit herkömmlichen Methoden regenerieren, d.h. wiederaufbereiten.

Vorteilhaft erreicht ein derart hergestellter Gießereiformstoff mit beispielhaft 10Gew.-% der erfindungsgemäßen Gießereibindermischung Biegezugfestigkeiten von mindestens80 N/cm² nach 6 h.

Weiterhin zur Erfindung gehört ein anorganisches, hydraulisch erhärtendes, ettringitbildendes Bindemittel für Gießereiformstoffe.

In einer Ausführungsform enthält das anorganische, hydraulisch erhärtende, ettringitbildende Bindemittel zur Herstellung von Gießereiformstoffen oder Gießereiformen 5 bis 80 Gew.-% mindestens eines Sulfatträgers und 20 bis 95 Gew.-% mindestens eines Calciumaluminats und/oder eines Calciumsulfoaluminats. Der mindestens eine Sulfatträger, das mindestens eine Calciumaluminat und/oder Calciumsulfoaluminat weisen eine spezifische Oberfläche nach Blaine von mindestens 2500 cm²/g auf. Das anorganische, hydraulisch erhärtende, ettringitbildende Bindemittel bildet unter Zugabe eines Aktivators mindestens 15 Gew.-% Ettringit, bezogen auf die Masse des Bindemittels.

Vorteilhaft erreicht ein derartiges Bindemittel für Gießereiformstoffe eine deutliche höhere Frühfestigkeit bei Biegezugbelastung und bei schnellerer Erhärtung im Vergleich zu aus dem Stand der Technik bekannten, anorganischen, hydraulisch erhärtenden Bindemitteln für Gießereiformstoffe. Dadurch kann die wirtschaftliche Form- bzw. Kernherstellung und die wirtschaftliche Herstellung von Gussteilen gewährleistet werden. Weiterhin vorteilhaft erzeugt ein derartiges Bindemittel keine umweit- und/oder gesundheitsschädliche Emissionen beim Abguss der Metallschmelze in der Gießereiform, wie aus dem Stand der Technik bekannte organische Bindemittel.

In einer Ausführungsform bildet das anorganische, hydraulisch erhärtende, ettringitbildende Bindemittel unter Zugabe eines Aktivators mindestens 15 Gew.-% Ettringit, bezogen auf die Masse des Bindemittels. In einer Ausführungsform bildet das anorganische, hydraulisch erhärtende, ettringitbildende Bindemittel unter Zugabe von 20 bis 100 Gew.-% Wasser, bezogen auf die Masse des anorganischen, hydraulisch erhärtenden, ettringitbildenden Bindemittels mindestens 15 Gew.-% Ettringit. In einer weiteren Ausführungsform bildet das anorganische, hydraulisch erhärtende, ettringitbildende Bindemittel unter Zugabe von 35 bis 75 Gew.-% Wasser, bezogen auf die Masse des anorganischen, hydraulisch erhärtenden, ettringitbildenden Bindemittels mindestens 15 Gew.-% Ettringit.

In einer bevorzugten Ausführungsform umfasst das mindestens eine Calciumaluminat ein Calciumaluminat, eine Mischung aus Calciumaluminaten und Tonerdezementklinker.

In einer weiteren bevorzugten Ausführungsform umfasst das mindestens eine Calciumsulfoaluminat Yeelimit und Calciumsulfoaluminathaltige Zementklinker.

In einer weiteren bevorzugten Ausführungsform ist der mindestens eine Sulfatträger Calciumsulfat.

In einer Ausführungsform enthält das anorganische, hydraulisch erhärtende, ettringitbildende Bindemittel 5 bis 80 Gew.-% mindestens eines Sulfatträgers und 20 bis 95 Gew.-% mindestens eines Calciumaluminats oder eines Calciumsolfoaluminats. In einer bevorzugten Ausführungsform enthält das anorganische, hydraulisch erhärtende, ettringitbildende Bindemittel 5 bis 80 Gew.-% mindestens eines Sulfatträgers und 20 bis 95 Gew.-% Tonerdezementklinker.

In einer weiteren Ausführungsform enthält das anorganische, hydraulisch erhärtende, ettringitbildende Bindemittel 5 bis 80 Gew.-% mindestens eines Sulfatträgers und 20 bis 95 Gew.-% reinen Yeelemit. Es kann vorteilhaft sein, dass das anorganische, hydraulisch erhärtende, ettringitbildende Bindemittel 5 bis 80 Gew.-% mindestens eines Sulfatträgers und 20 bis 95 Gew.-% mindestens eines Calciumaluminats und eines Calciumsulfoaluminats enthält.

In einer Ausführungsform enthält das anorganische, hydraulisch erhärtende, ettringitbildende Bindemittel 5 bis 80 Gew.-% mindestens eines Sulfatträgers, und 20 bis 95 Gew.-% Tonerdezementklinker und reinen Yeelemit. Ein anorganisches, hydraulisch erhärtendes, ettringitbildendes Bindemittel enthält beispielsweise 14 Gew.-% mindestens eines Sulfatträgers und 86 Gew.-% mindestens eines Calciumaluminats, wie Tonerdezementklinker.

In einer weiteren Ausführungsform enthält das Bindemittel zusätzlich mindestens eine calciumhaltige Komponente mit einem Anteil von größer 0 bis 30 Gew.-%.

Die freigesetzten Calciumionen reagieren mit den anderen Komponenten des anorganischen, hydraulisch erhärtenden, ettringitbildenden Bindemittels oder mit von den anderen Komponenten des anorganischen, hydraulisch erhärtenden, ettringitbildenden Bindemittels freigesetzten Stoffen. Vorteilhaft können durch den Zusatz von calciumhaltigen Komponenten die Kosten des Bindemittels gesenkt werden, da der Anteil des mindestens einen Calciumaluminats und/oder des Calciumsulfoaluminats gesenkt werden kann. Weiterhin vorteilhaft lassen sich die Verarbeitungszeiten durch den Zusatz calciumhaltiger Komponenten genauer einstellen.

Ein anorganisches, hydraulisch erhärtendes, ettringitbildendes Bindemittel enthält beispielweise einen abgesenkten Anteil des mindestens einen Calciumaluminats, wie Tonerdezementklinker und eine calciumhaltige Komponente und mindestens einen Sulfatträger mit einer beispielhaften Zusammensetzung von 42 Gew.-% mindestens eines Sulfatträgers, 39 Gew.-% Tonerdezementklinker und 19 Gew.-% einer calciumhaltigen Komponente, wie Portlandzementklinker.

In einer weiteren bevorzugten Ausführungsform sind die calciumhaltigen Komponenten ausgewählt aus Portlandzementklinker und/oder Kalk.

In einer weiteren bevorzugten Ausführungsform enthält das Bindemittel zusätzlich 0,1 bis 10 Gew.- Additive, bezogen auf die Masse des Bindemittels.

In einer Ausführungsform wird das Bindemittel zur Herstellung von Gießereiformstoffen verwendet.

In einer Ausführungsform enthält eine Gießereiformstoffmischung bzw. ein Gießereiformstoff zur Herstellung von Gießereiformen und/oder -kernen, 80 bis 97,5 Gew.-% eines Formgrundstoffs und 2,5 bis 20 Gew.-% eines anorganischen, hydraulisch erhärtenden, ettringitbildenden Bindemittels. Das anorganische, hydraulisch erhärtende, ettringitbildende Bindemittel enthält dabei 5 bis 80 Gew.-% mindestens eines Sulfatträgers und 20 bis 95 Gew.-% mindestens eines Calciumaluminats und/oder eines Calciumsulfoaluminats.

Ein Formgrundstoff im Sinne der Erfindung ist ein körniges Feuerfestmaterial, welches gemischt mit einem Bindemittel zur Herstellung von Gießereiformen und/oder -kernen genutzt wird und auch als Formsand bezeichnet wird. Dem Fachmann sind typische Formgrundstoffe, wie beispielsweise Quarzsand bekannt. Ein Formgrundstoff kann auch ein Spezialsand, wie beispielsweise Bauxitsand, Chromit-, Zirkon- oder Olivinsand sein.

Ein anorganisches, hydraulisch erhärtendes, ettringitbildendes Bindemittel im Sinne der Erfindung, ist ein Bindemittel, welches unter Einwirkung eines Aktivators, bevorzugt Wasser, selbstständig unter Bildung von Ettringit als hauptsächlich festigkeitswirksamer Phase innerhalb von maximal 6 h erhärtet. Die Bildung anderer festigkeitswirksamer Phasen ist vernachlässigbar oder erfolgt erst nach 6 h. Vorteilhaft bildet ein derartiges Bindemittel etwa 15 - 40 Gew.-% Ettringit, bezogen auf die Masse des Bindemittels.

Vorteilhaft erreicht ein Gießereiformstoff mit beispielhaft 10 Gew.-% des anorganischen, hydraulisch erhärtenden, ettringitbildenen Bindemittels Biegezugfestigkeiten von mindestens 80 N/cm² nach 6 h.

In einer Ausführungsform enthält der Gießereiformstoff zur Herstellung von Gießereiformen und/oder -kernen 80 bis 97,5 Gew.-% eines Formgrundstoffs und 2,5 bis 20 Gew.-% eines anorganischen, hydraulisch erhärtenden, ettringitbildenden Bindemittels. Das anorganische, hydraulisch erhärtende, ettringitbildende Bindemittel enthält dabei 5 bis 80 Gew.-% mindestens eines Sulfatträgers und 20 bis 95 Gew.-% mindestens eines Calciumaluminats und/oder eines Calciumsulfoaluminats und zusätzlich 0 bis 30 Gew.-% einer calciumhaltigen Komponente.

Dem Fachmann ist bekannt, dass einem Gießereiformstoff, der ein anorganisches, hydraulisch erhärtendes Bindemittel enthält, ein Aktivator zugegeben wird, damit die Verfestigung des Gießereiformstoffs einsetzt.

In einer Ausführungsform werden dem Gießereiformstoff 20 bis 100 Gew.-% Wasser, bezogen auf die Masse des anorganischen, hydraulisch erhärtenden, ettringitbildenden Bindemittels zugegeben. In einer weiteren Ausführungsform werden dem Gießereiformstoff 35 bis 75Gew.-% Wasser, bezogen auf die Masse des anorganischen, hydraulisch erhärtenden, ettringitbildenden Bindemittels zugegeben.

In einer Ausführungsform enthält der Gießereiformstoff 7 bis 15 Gew.-% des anorganischen, hydraulisch erhärtenden, ettringitbildenden Bindemittels. Dem Fachmann ist bekannt, dass über den Bindemittelgehalt im Gießereiformstoff dessen Eigenschaften, wie Gasdurchlässigkeit und Festigkeit beeinflusst werden können und ein Optimum eingestellt werden kann. So können höhere Bindemittelgehalte die Festigkeitsausbildung fördern und geringere Bindemittelgehalte die Gasdurchlässigkeit des Gießereiformstoffs erhöhen.

In einer weiteren Ausführungsform enthält der Gießereiformstoff zusätzlich 0,1 bis 10 Gew.-% mindestens ein Additiv, bezogen auf die Masse des Bindemittels. Vorteilhaft lässt sich durch den Gehalt an Additiven die Verarbeitungszeit des Gießereiformstoffs steuern.

In einer weiteren Ausführungsform umfasst das mindestens eine Additiv Erhärtungsbeschleuniger, Erstarrungsverzögerer, Stellmittel oder Verflüssiger.

In einer Ausführungsform enthält der Gießereiformstoff einen Erhärtungsbeschleuniger und einen Verflüssiger als Additive. In einer Ausführungsform enthält der Gießereiformstoff 0,1 bis 2 Gew.-% Calciumchlorid als Erhärtungsbeschleuniger und 0,1 bis 0,5Gew.-% Carboxylsäure als Verflüssiger, jeweils bezogen auf die Masse des Bindemittels. Die Additive können sowohl dem Gießereiformstoff oder dem Aktivator zugegeben werden. Bevorzugt werden die Additive dem Aktivator zuzugeben. Vorteilhaft sind dadurch die Additive bereits im Aktivator gelöst und können sich homogen im Gießereiformstoff verteilen.

Für die Realisierung der Erfindung ist es auch zweckmäßig, die vorbeschriebenen Ausführungsformen und Merkmale der Ansprüche zu kombinieren.

Nachfolgend soll die Erfindung anhand einiger Ausführungsbeispiele eingehender erläutert werden. Die Ausführungsbeispiele sollen dabei die Erfindung beschreiben ohne diese zu beschränken.
Fig. 1 zeigt die zeitliche Entwicklung der Formstoffbiegezugfestigkeit eines Gießereiformstoffs nach Bsp. 1.
Fig. 2 zeigt die zeitliche Entwicklung der Formstoffbiegezugfestigkeit eines Gießereiformstoffs nach Bsp. 2.

### Ausführungsbeispiel 1

Ein Gießereiformstoff wird hergestellt, indem Quarzsand H32 der Quarzwerk Gruppe als Formgrundstoff mit 10 Gew.-% einer Gießereibindermischung, bezogen auf die Masse des Formgrundstoffs und 50 Gew.-% Wasser, bezogen auf das Gewicht der Gießereibindermischung in einem Flügelmischer für 40 min bei 160 Rührwerksdrehungen pro Minute gemischt werden. Die Gießereibindermischung enthält 15 Gew.-% eines Sulfatträgers, Calciumsulfat-Halbhydrat, und 85 Gew.-% Tonerdezementklinker mit einem Gehalt von Monocalciumaluminat (CA) von 60 Gew.-%. Die Mahlfeinheiten der einzelnen Komponenten liegen zwischen 2500 und 3200 cm²/g nach Blaine.

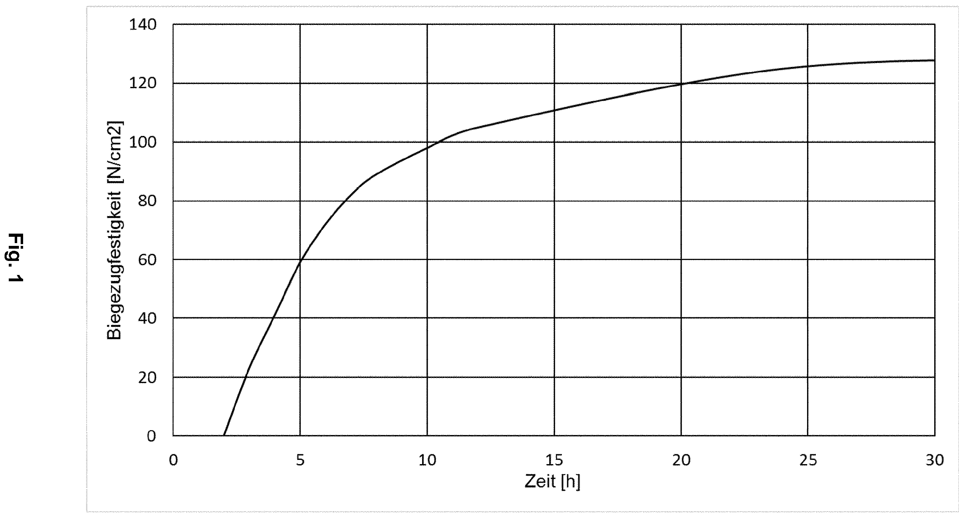

Ein derartiger Gießereiformstoff weist eine Verarbeitungszeit von etwa 40 min zur Herstellung von Gießereiformen und/oder-kernen auf. Fig. 1 zeigt, dass ein derartiger Gießereiformstoff nach 8 h Formstoffbiegezugfestigkeiten von etwa 90 N/cm² erreicht. Die Formstoffbiegezugfestigkeit wurde mit einem Universalfestigkeitsmessgerät von Morek Multiserw. bestimmt an Biegeriegeln mit den Abmessungen 22,4 x 22,4 x 170 mm³. Der Abguss der Metallschmelze in aus dem Gießereiformstoff hergestellte Gießereiformen erfolgte nach 8 h.

### Ausführungsbeispiel 2

Eine erfindungsgemäße Gießereibindermischung zur Herstellung eines Gießereiformstoffs für die Herstellung von Gießereiformen und/oder -kernen enthält 42,5 Gew.-% Calciumsulfat-Halbhydrat, 39,5 Gew.-% Tonerdezementklinker mit einem Gehalt von Monocalciumaluminat (CA) von 60 Gew.-% und 17,7 Gew.-% Portlandzementklinker, wie er für die Herstellung von Portlandzement Typ CEM I genutzt wird. Weiterhin enthält die Gießereibindermischung 0,3% eines handelsüblichen Verflüssigers Carboxylsäure. Die Mahlfeinheiten der einzelnen Komponenten liegt zwischen 2500 und 3800 cm²/g nach Blaine.

9 Gew.-% einer derartigen Gießereibindermischung werden mit 91 Gew.-% Quarzsand H32 der Quarzwerke Gruppe unter Zusatz von 42 Gew.-% Wasser, bezogen auf das Gewicht der Gießereibindermischung, für 4 min bei 160 Rührwerksdrehungen pro Minute in einem Flügelmischer gemischt.

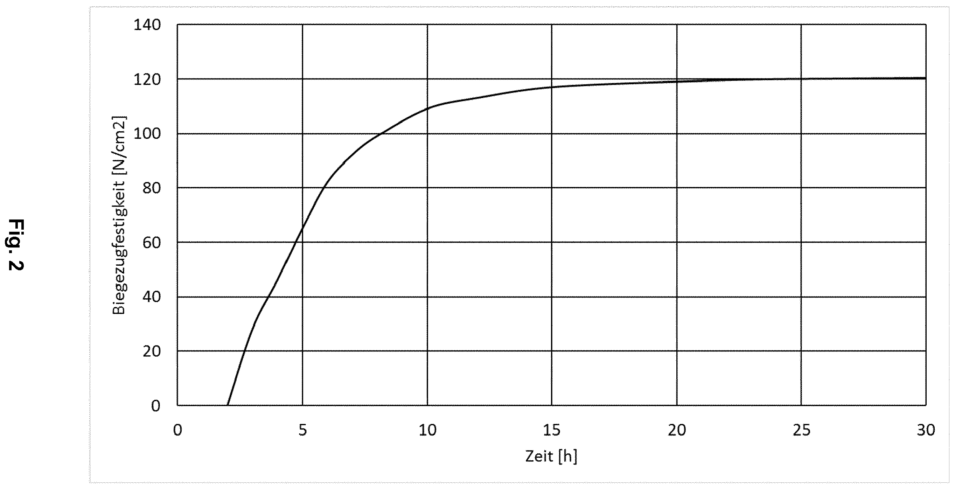

Der so erhaltene Gießereiformstoff weist eine Verarbeitungszeit von etwa 20 min zur Herstellung von Gießereiformen und/oder Kernen auf. Fig. 2 zeigt, dass der Gießereiformstoff nach 8 h Formstoffbiegezugfestigkeiten von etwa 105 N/cm² erreicht. Die Formstoffbiegezugfestigkeit wurde mit einem Universalfestigkeitsmessgerät von Morek Multiserw bestimmt an Biegeriegeln mit den Abmessungen 22,4 x 22,4 x 170 mm³. Der Abguss der Metallschmelze in aus dem Gießereiformstoff hergestellte Gießereiformen erfolgte nach 8 h.

## Patentansprüche

1. Gießereibindermischung zur Herstellung eines Gießereiformstoffs zur Herstellung von Gießereiformen und/oder -kernen, wobei die Gießereibindermischung geeignet ist, durch Mischen mit einem Aktivator Ettringit zu bilden, **dadurch gekennzeichnet, dass** die Gießereibindermischung 5 bis 80 Gew.-% mindestens eines Sulfatträgers, 20 bis 95 Gew.-% mindestens eines Calciumaluminats und/oder Calciumsulfoaluminats, 0 bis 30 Gew.-% mindestens einer calciumhaltigen Komponente und 0 bis 10 Gew.-% mindestens eines Additivs enthält, wobei sich die Bestandteile der Gießereibindermischung zu 100 Gew.-% ergänzen.

2. Gießereibindermischung nach Anspruch 1, **dadurch gekennzeichnet, dass** der mindestens eine Sulfatträger, das mindestens eine Calciumaluminat und/oder Calciumsulfoaluminat eine spezifische Oberfläche nach Blaine von mindestens 2500 cm²/g aufweisen.

3. Gießereibindermischung nach Anspruch 1 oder 2, **dadurch gekennzeichnet, dass** das mindestens eine Calciumaluminat eine Mischung aus Calciumaluminaten und/oder Tonerdezementklinker umfasst.

4. Gießereibindermischung nach einem der Ansprüche 1 bis 3, **dadurch gekennzeichnet, dass** das mindestens eine Calciumsulfoaluminat Yeelimit und/oder calciumsulfoaluminathaltige Zementklinker umfasst.

5. Gießereibindermischung nach einem der Ansprüche 1 bis 4, **dadurch gekennzeichnet, dass** die calciumhaltige Komponente ausgewählt ist aus Portlandzementen und Kalk.

6. Gießereibindermischung nach einem der Ansprüche 1 bis 5, **dadurch gekennzeichnet, dass** der mindestens eine Sulfatträger Calciumsulfat und eine Mischung verschiedener Formen des Calciumsulfats umfasst.

7. Gießereiformstoffmischung zur Herstellung eines Gießereiformstoffs zur Herstellung von Gießereiformen und/oder -kernen, enthaltend die Komponenten Formgrundstoff, und Gießereibindermischung, wobei zur Herstellung eines Gießereiformstoffs die Komponenten geeignet sind durch Mischen mit einem Aktivator Ettringit zu bilden, **dadurch gekennzeichnet, dass** die Gießereibindermischung 5 bis 80 Gew.-% mindestens eines Sulfatträgers, 20 bis 95 Gew.-% mindestens eines Calciumaluminats und/oder Calciumsulfoaluminats, 0 bis 30 Gew.-% mindestens einer calciumhaltigen Komponente und 0 bis 10 Gew.-% mindestens eines Additivs enthält, wobei sich die Bestandteile der Gießereibindermischung zu 100 Gew.-% ergänzen, und dass die Gießereiformstoffmischung 2,5 bis 20 Gew.-% der Gießereibindermischung enthält.

8. Gießereiformstoffmischung nach Anspruch 7, **dadurch gekennzeichnet, dass** die Gießereiformstoffmischung 7 bis 15 Gew.-% der Gießereibindermischung enthält.

9. Gießereiformstoffmischung nach Anspruch 7 oder 8, **dadurch gekennzeichnet, dass** das mindestens eine Additiv Erhärtungsbeschleuniger, Erstarrungsverzögerer, Stellmittel oder Verflüssiger umfasst.

10. Verfahren zur Herstellung eines Gießereiformstoffs zur Herstellung von Gießereiformen und/oder -kernen durch Mischen eines Formgrundstoffs, einer Gießereibindermischung nach einem der Ansprüche 1 bis 6, und eines Aktivators, wobei 2,5 bis 20 Gew.-% der Gießereibindermischung, bezogen auf die Masse des Formgrundstoffs, und 20 bis 100 Gew.-% des Aktivators, bezogen auf die Masse der Gießereibindermischung, mit dem Formgrundstoff gemischt werden.

11. Verfahren nach Anspruch 10, **dadurch gekennzeichnet, dass** der Aktivator Wasser ist.
